# EUROPEAN PATENT APPLICATION

(11) **EP 4 170 352 A1**
(43) Date of publication of application: **26.04.2023**
(21) Application number: 21827926.3
(22) Date of filing: 08.02.2021
(51) Int. Cl.: G01N 35/10, G01N 35/02

(54) **AUTOMATIC ANALYSIS DEVICE AND ANALYSIS METHOD**

(30) Priority: 23.06.2020 JP 2020107593
(71) Applicant: HITACHI HIGH-TECH CORPORATION, Tokyo 105-6409 (JP)
(72) Inventor: KUWABARA, Masayuki, Tokyo 105-6409 (JP); MIYAZAKI, Mariko, Tokyo 100-8280 (JP); HAMASAKI, Koshin, Tokyo 105-6409 (JP); NODA, Kazuhiro, Tokyo 100-8280 (JP)
(74) Representative: MERH-IP Matias Erny Reichl Hoffmann Patentanwälte PartG mbB
(86) International application number: PCT/JP2021/004556
(87) International publication number: WO 2021/260994

(57) **Abstract**

Provided is a technology that enables stirring of a liquid containing fine particles without providing a dedicated stirring mechanism.

An automatic analyzer according to the present disclosure includes a probe that aspirates and discharges a specimen and a reagent, and a control unit that controls an operation of the probe, in which the control unit controls the probe so that the specimen, the reagent, and fine particles are dispensed to an empty vessel to obtain a liquid mixture, and a first stirring of aspirating, discharging, and stirring the liquid mixture in the vessel before precipitation of the fine particles after the dispensing, and a second stirring of aspirating, discharging, and stirring the liquid mixture in the vessel after the precipitation of the fine particles after the first stirring are performed.

## Description

### Technical Field

The present disclosure relates to an automatic analyzer and an analysis method.

### Background Art

An automatic analyzer, a chemical experiment device, and the like are devices that perform analysis and experiments using various reagents. For example, in an immunoanalyzer for clinical test, magnetic particles are generally used as one of the reagents for separating a measurement target from other substances.

A separation method using the magnetic particles is a method in which a compound that causes specific binding is adsorbed or bound to a surface of the magnetic particles, and components in a specimen solution are recovered and concentrated via the compound. However, since the magnetic particles have a large specific - gravity, the magnetic particles gradually settle due to gravity.

PTL 1 discloses that a liquid containing a magnetic substance in a reaction vessel is stirred using a stirring mechanism in an automatic analyzer (see claim 1 of PTL 1).

### Citation List

### Patent Literature

PTL 1: JP2019-100976A

### Summary of Invention

### Technical Problem

However, in the automatic analyzer according to PTL 1, since a space for providing the stirring mechanism is essential, it is difficult to save the space of the device.

Therefore, the present disclosure provides a technology that enables stirring of a liquid containing fine particles without providing a dedicated stirring mechanism.

### Solution to Problem

In order to solve the above problem, an automatic analyzer according to the present disclosure includes a probe configured to aspirate and discharge a specimen and a reagent, and a control unit configured to control an operation of the probe, and the control unit controls the probe so that the specimen, the reagent, and fine particles are dispensed to an empty vessel to obtain a liquid mixture, and a first stirring of aspirating, discharging, and stirring the liquid mixture in the vessel before precipitation of the fine particles after the dispensing, and a second stirring of aspirating, discharging, and stirring the liquid mixture in the vessel after the precipitation of the fine particles after the first stirring are performed.

More features relevant to the present disclosure are clarified based on descriptions of the present description and accompanying drawings. Aspects of the present disclosure may be achieved and implemented using elements and various combinations of the elements and the following detailed description and accompanying claims. Descriptions in this specification are merely exemplary, and are not intended to limit the scope of the claims or application of the present disclosure in any sense.

### Advantageous Effects of Invention

According to the automatic analyzer of the present disclosure, it is possible perform stirring of a liquid containing fine particles without providing a dedicated stirring mechanism. Problems, configurations, and effects other than those described above will become apparent from the following description of the embodiments.

### Brief Description of Drawings

[FIG. 1] FIG. 1 is a schematic view illustrating an automatic analyzer according to a first embodiment.
[FIG. 2] FIG. 2 is a flowchart illustrating an analysis method according to the first embodiment.
[FIG. 3] FIG. 3 is a schematic view for illustrating a first stirring operation according to the first embodiment.
[FIG. 4] FIG. 4 is a schematic view for illustrating a second stirring operation according to the first embodiment.
[FIG. 5] FIG. 5 a diagram illustrating parameter values and the degree of dispersion of magnetic particles under each stirring condition.
[FIG. 6] FIG. 6 is a graph illustrating the distribution of particle density under each stirring condition.
[FIG. 7] FIG. 7 is a graph illustrating the relationship between each parameter of the second stirring and the degree of dispersion.
[FIG. 8] FIG. 8 is a schematic view for illustrating a second stirring operation according to a second embodiment.
[FIG. 9] FIG. 9 is a schematic view illustrating an automatic analyzer according to a third embodiment.
[FIG. 10] FIG. 10 is a schematic view for illustrating a second stirring operation according to the third embodiment.

### Description of Embodiments

### [First Embodiment]

### <Configuration Example of Automatic Analyzer>

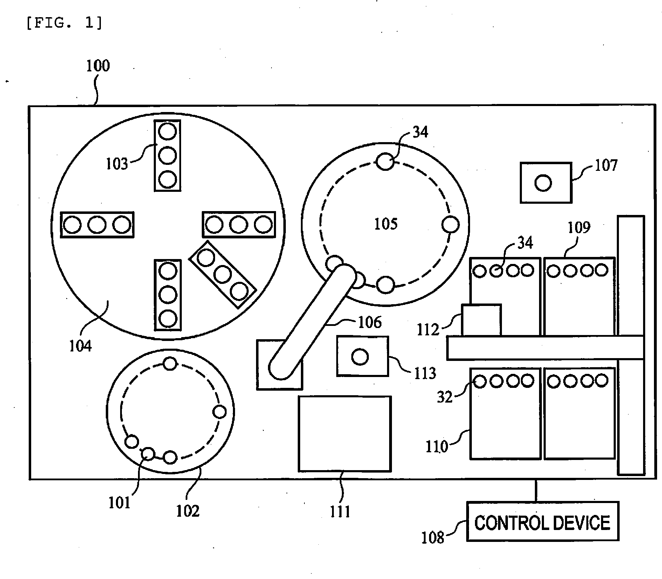

FIG. 1 is a schematic view illustrating an automatic analyzer 100 according to a first embodiment. As illustrated in FIG. 1, the automatic analyzer 100 includes a specimen vessel disk 102, a reagent vessel disk 104, an incubator disk 105, a dispensing mechanism 106, a detection unit 107, a control device 108, a reaction vessel storage unit 109, a dispensing tip storage unit 110, a disposal unit 111, a transport device 112, and a dispensing tip mounting unit 113.

The specimen vessel disk 102 stores a plurality of specimen vessels 101 that accommodate biological samples (hereinafter, referred to as specimens) such as blood and urine. The reagent vessel disk 104 stores a plurality of reagent vessels 103 that accommodate various reagents used for analysis of the specimens. The incubator disk 105 stores a plurality of reaction vessels 34 for reactions of the specimens and the reagents.

The dispensing mechanism 106 drives a probe (not illustrated in FIG. 1) provided on an arm rotating around a rotation axis to dispense the specimen from the specimen vessel 101 to the reaction vessel 34 and dispense the reagent from the reagent vessel 103 to the reaction vessel 34 by aspiration and discharge operations. The detection unit 107 detects characteristics of a reaction liquid of the specimen and the reagent dispensed into the reaction vessel 34.

The control device 108 is, for example, a computer device, and controls the overall operations of the automatic analyzer 100. In addition, the control device 108 receives a detection result from the detection unit 107 and analyzes a measurement target component in the specimen.

The reaction vessel storage unit 109 stores a plurality of unused reaction vessels 34. The dispensing tip storage unit 110 stores a plurality of unused dispensing tips 32. The used reaction vessel 34 and dispensing tip 32 are discarded in the disposal unit 111.

The transport device 112 includes an actuator that grips the reaction vessel 34 and the dispensing tip 32 and is movable in three axial directions. The transport device 112 transports the reaction vessel 34 stored in the reaction vessel storage unit 109 to the incubator disk 105, transports the dispensing tip 32 stored in the dispensing tip storage unit 110 to the dispensing tip mounting unit 113, and discards the used reaction vessel 34 to the disposal unit 111. The dispensing tip 32 is mounted on a tip end of the probe of the dispensing mechanism 106 in the dispensing tip mounting unit 113.

### <Analysis Method>

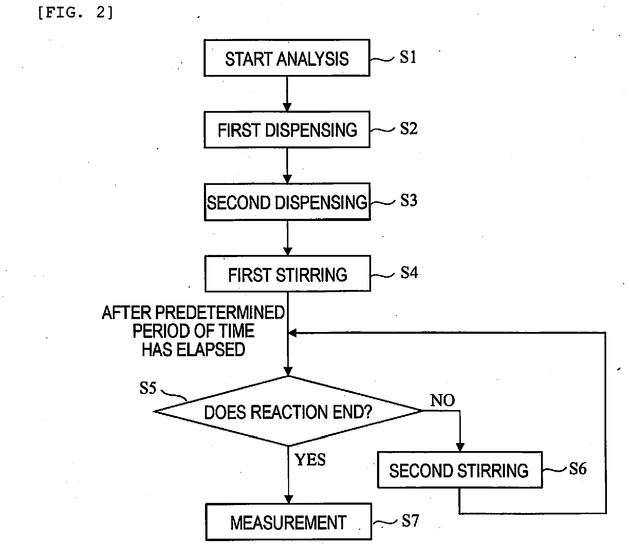

FIG. 2 is a flowchart illustrating an analysis method of the specimen by the automatic analyzer 100. Hereinafter, an immunoassay method will be described as an example. A reagent for immunoassay includes a component obtained by integrating an antibody that binds to the measurement target component in the specimen and a label that is chemically bound to the antibody (hereinafter, simply referred to as "label"), and a biotinylated modified antibody that binds magnetic particles to the measurement target component in the specimen. Before starting the analysis performed by the automatic analyzer 100, the reagent for immunoassay is set in the reagent vessel disk 104 in a state of being stored in the reagent vessel 103. A solution of the magnetic particles (fine particles) whose surface is coated with avidin (hereinafter, simply referred to as "magnetic particle solution") is also set in the reagent vessel disk 104 in a state of being stored in the reagent vessel 103. Avidin and biotin have a property of extremely strong binding.

### (Step S1: Start Analysis)

In step S1, when a user inputs an instruction to start the operation to the control device 108, the control device 108 activates each unit of the automatic analyzer 100 to start the analysis. Here, the control device 108 drives the dispensing mechanism 106 and the transport device 112 to mount the dispensing tip 32 on the probe in the dispensing tip mounting unit 113.

### (Step S2: First Dispensing)

In step S2, the control device 108 causes the specimen vessel disk 102 to rotate and causes the dispensing mechanism 106 to move, so that the specimen is dispensed from the specimen vessel 101 into the reaction vessel 34 of the incubator disk 105. In addition, the control device 108 causes the reagent vessel disk 104 to rotate and causes the dispensing mechanism 106 to move, so that the reagent is dispensed from the reagent vessel 103 into the reaction vessel 34.

After the reagent and the specimen are dispensed, for example, while the reagent and the specimen are allowed to stand at, for example, 37 °C for 9 minutes, the measurement target component included in the specimen and the label are bound. Further, the measurement target component and the biotinylated modified antibody bind to each other, and the label and biotin are integrated via the measurement target component. It is expected that while the reagent and the specimen are allowed to stand, the reaction continues due to diffusion and an equilibrium state is obtained. After this reaction reaches equilibrium, the process proceeds to a next step.

### (Step S3: Second Dispensing)

In step S3, the control device 108 causes the reagent vessel disk 104 to rotate and causes the dispensing mechanism 106 to move, so that the magnetic particle solution is dispensed from the reagent vessel 103 accommodating the magnetic particle solution into the reaction vessel 34.

### (Step S4: First Stirring)

In step S4, the control device 108 drives the dispensing mechanism 106 to aspirate, discharge, and stir a liquid mixture of the specimen, the reagent, and the magnetic particles before precipitation of the magnetic particles. The stirring performed before the precipitation of the magnetic particles is referred to as a first stirring. Specific conditions of the first stirring will be described later.

After the first stirring, the control device 108 causes the dispensing mechanism 106 to rotate, discards the dispensing tip 32 in the disposal unit 111, drives the transport device 112 to set the new dispensing tip 32 in the dispensing tip mounting unit 113, causes the dispensing mechanism 106 to rotate, and mounts the new dispensing tip 32 on a dispensing probe in the dispensing tip mounting unit 113.

### (Step S5: Reaction)

In step S5, the control device 108 determines whether the reaction of the specimen and the reagent has ended after a predetermined period of time has elapsed from the first stirring. Here, when a reaction time set in advance for each reagent or specimen has elapsed, it can be determined that the reaction has ended. When the reaction has not ended, the process proceeds to step S6.

After the magnetic particle solution is dispensed and the first stirring is performed, the liquid mixture is allowed to stand at, for example, 37 °C for 9 minutes, so that the magnetic particles, the measurement target component, and the label react with and bind to one another. However, depending on a measurement target and the reagent, an additional reaction time of a longer time, for example, 9 minutes, 1,8 minutes, 27 minutes, or 36 minutes may be required in order to perform measurement with high sensitivity. When a long time is required for the reaction, fine particles having a large specific gravity such as the magnetic particles settle in the reaction vessel 34, and thus, there is a possibility that reactivity with the measurement target component present in the reaction liquid decreases, and variations in measurement result occur. Therefore, when a long time is required for the reaction, it is required to stir the reaction liquid every predetermined period of time, for example, every 9 minutes. Each stirring performed for the predetermined period of time is as in the following step S6.

### (Step S6: Second Stirring)

In step S6, the control device 108 drives the dispensing mechanism 106 to aspirate, discharge, and stir the liquid mixture in a state in which the magnetic particles are precipitated. The stirring performed after the precipitation of the magnetic particles is referred to as a second stirring. Specific conditions of the second stirring will be described later. When the second stirring is performed a plurality of times, the stirring can be performed under the same conditions each time.

### (Step S7: Measurement)

When it is determined in step S5 that the reaction has ended, in step S7, the control device 108 drives the transport device 112 to transport the reaction vessel 34 to the detection unit 107. The detection unit 107 measures the measurement target component in the reaction vessel 34. At this time, the magnetic particles integrated with the measurement target component and the label in the reaction vessel 34 are captured by a magnet in the detection unit 107. Thereafter, when a voltage is applied, an amount of light emitted by an electrochemical method is detected.

Depending on an analysis item, the specimen and a first reagent may be dispensed in the first dispensing, and a second reagent and the magnetic particle solution may be dispensed in the second dispensing. The specimen, the reagent, and the magnetic particle solution may be dispensed at one time.

### <Condition of First Stirring>

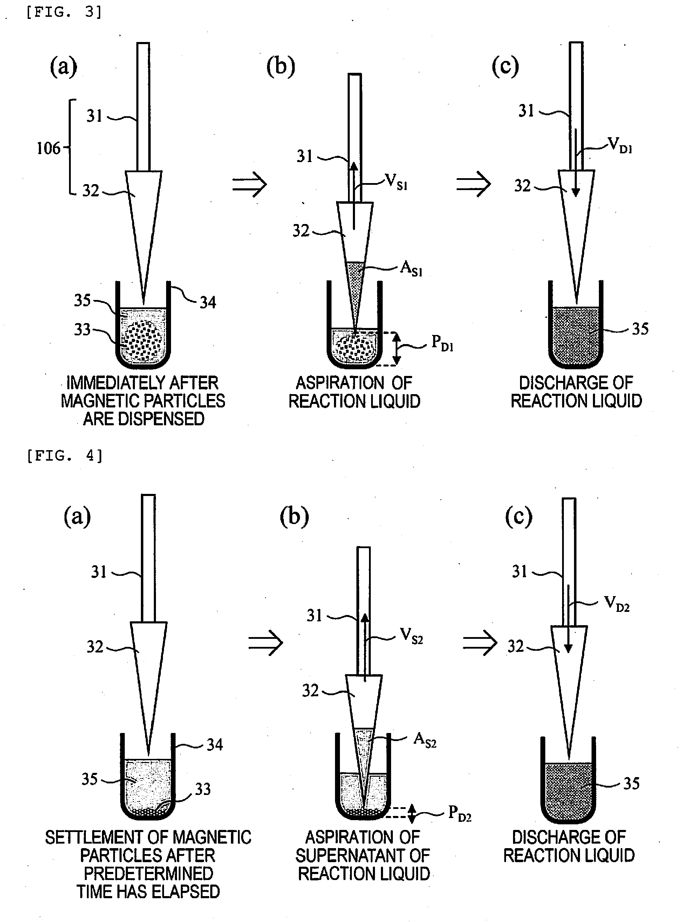

(a) to (c) of FIG. 3 are schematic views for illustrating a first stirring operation. Actually, the stirring operation is performed by the control device 108 controlling the dispensing mechanism 106, but in order to simplify the description, the dispensing mechanism 106 will be described below as a subject of the operation.

As illustrated in FIG. 3, the dispensing mechanism 106 includes a dispensing probe 31 and the dispensing tip 32 mounted on a tip end of the dispensing probe 31. (a) of FIG. 3 illustrates a state immediately after the specimen and the reagent are dispensed into the reaction vessel 34 in the first dispensing and the solution containing magnetic particles 33 is dispensed into the reaction vessel 34 in the second dispensing. As illustrated in (a) of FIG. 3, a reaction liquid 35 (liquid mixture) is obtained by mixing the specimen, the reagent, and the magnetic particles. Immediately after the magnetic particles 33 are dispensed, the magnetic particles 33 are not dispersed in the entire reaction liquid 35.

Next, as illustrated in (b) of FIG. 3, the dispensing mechanism 106 aspirates the reaction liquid 35 into the dispensing tip 32 at an aspiration rate V_{S1} (µL/s) in a state in which the tip end of the dispensing tip 32 is immersed in the reaction liquid 35. After the aspiration of the reaction liquid 35 by an aspiration amount A_{S1} is completed, the dispensing mechanism 106 moves the dispensing probe 31, so that a position of the tip end of the dispensing tip 32 is at a discharge position P_{D1}. The discharge position P_{D1} can be represented by a distance between the tip end of the dispensing tip 32 and a bottom of the reaction vessel 34 at a start of discharge.

Next, as illustrated in (c) of FIG. 3, the dispensing mechanism 106 discharges the reaction liquid aspirated into the dispensing tip 32 at a discharge rate V_{D1} (pL/s). As a result, the magnetic particles 33 are dispersed in the entire reaction liquid 35. After the discharge is completed, the dispensing mechanism 106 retracts the dispensing tip 32, so that the position of the tip end of the dispensing tip 32 is higher than a liquid surface of the reaction liquid 35.

### <Condition ofSecond Stirring>

(a) to (c) of FIG. 4 are schematic views for illustrating a second stirring operation. (a) of FIG. 4 illustrates a state in which the magnetic particles 33 settle in the reaction vessel 34 after the predetermined period of time has elapsed from the first stirring.

Next, as illustrated in (b) of FIG. 4, the dispensing mechanism 106 lowers the position of the dispensing tip 32 while aspirating supernatant of the reaction liquid 35 at an aspiration rate Vsz in a state in which the tip end of the dispensing tip 32 is immersed in the reaction liquid 35. After the aspiration of the reaction liquid 35 by an aspiration amount A_{S2} is completed, the dispensing mechanism 106 moves the dispensing probe 31, so that the position of the tip end of the dispensing tip 32 is at a discharge position P_{D2}.

Next, as illustrated in (c) of FIG. 4, the dispensing mechanism 106 discharges the reaction liquid aspirated into the dispensing tip 32 at a discharge rate V_{D2} (pL/s). As a result, the magnetic particles 33 are dispersed in the entire reaction liquid 35. After the discharge is completed, the dispensing mechanism 106 retracts the dispensing tip 32, so that the position of the tip end of the dispensing tip 32 is higher than the liquid surface of the reaction liquid 35.

As described above, by performing stirring immediately after the magnetic particles 33 are dispensed and after the magnetic particles 33 settle, it is possible to improve the reactivity of the measurement target component dispersed in the solution and the magnetic particles 33. As a result, the variations in measurement result can be reduced, and thus analysis accuracy can be improved.

As described above, the first stirring operation and the second stirring operation are the same in terms of aspirating and discharging the reaction liquid 35 in the reaction vessel 34, but in the second stirring, the settled magnetic particles 33 are to be stirred, and thus, under the same conditions as the first stirring, it is difficult to disperse the magnetic particles 33 settled at the bottom of the reaction vessel 34. Therefore, by setting the conditions of the second stirring to appropriate conditions different from the conditions of the first stirring, it is possible to provide sufficient stirring efficiency to the settled magnetic particles 33.

Specifically, by setting the discharge rate V_{D2} in the second stirring faster than the discharge rate V_{D1} in the first stirring, the settled magnetic particles 33 can be dispersed with high stirring efficiency.

The settled magnetic particles 33 can also be dispersed by setting the discharge position P_{D2} in the second stirring lower than the discharge position P_{D1} in the first stirring, that is, at a position closer to the bottom of the reaction vessel 34.

The settled magnetic particles 33 can also be dispersed by setting the aspiration rate V_{S2} in the second stirring slower than the aspiration rate Vsi in the first stirring.

The aspiration amount A_{S2} of the reaction liquid 35 into the dispensing tip 32 in the second stirring can be set to an amount smaller than a total amount of the reaction liquid 35, and specifically, for example, can be set to 95% or less of the total amount of the reaction liquid 35. This is because when the aspiration amount A_{S2} exceeds the total amount of the reaction liquid 35, air bubbles are also aspirated, and air bubbles are mixed after the discharge, which may result in unstable stirring.

### <Simulation of Second Stirring>

Hereinafter, more specific conditions of the second stirring will be described. The present inventors have studied the conditions of the second stirring capable of providing sufficient stirring efficiency to the magnetic particles settled in the reaction vessel by using a simulator.

Parameters set in this simulation were defined as the aspiration amount, the aspiration rate, the discharge rate, and the discharge position (distance between the tip end of the dispensing tip and the bottom of the reaction vessel at the start of discharge). A diameter of the magnetic particle was set to 2.8 µm, a specific gravity was set to 1.4, and a viscosity of a solvent was set to 0.89 mPa·s. The total amount of the reaction liquid was set to 200 µL. A tip end diameter of the dispensing tip was set to 0.4 mm, and an inner volume was set to 368 µL.

The amount of the stirring liquid of the first stirring was set to 80 µL, whereas the amount of the stirring liquid of the second stirring was set to 95 µL, 140 µL, or 190 µL.

The aspiration rate of the first stirring was set to 200 µL/s, whereas the aspiration rate V_{S2} of the second stirring was set to 125, 190, or 250 µL/s.

The discharge rate of the first stirring was set to 125 µL/s, whereas the discharge rate V_{D2} of the second stirring was set to 100, 200, or 300 µL/s.

The discharge position of the first stirring was set to 2.8 mm, whereas the discharge position of the second stirring was set to 0.8 mm, 3.2 mm, or 5.6 mm. In addition, a condition in which the position of the tip end of the dispensing tip at an end of the aspiration of the second stirring was 5.6 mm and the discharge position at the start of discharge was 0.8 mm was also added.

The above parameters were combined to set the conditions of the second stirring from Case 1 to Case 13, and the simulation was performed. As an index indicating the degree of dispersion of the magnetic particles after the second stirring, a standard deviation of a particle density of each layer, in the reaction vessel (a region divided into 0 to 2 mm, 2 to 4 mm, 4 to 6 mm, 6 to 8 mm, 8 to 10 mm, and 10 to 11 mm from the bottom of the reaction vessel) was used. For example, when a particle density of a lower layer is high- and a particle density of an upper layer is low in the reaction vessel, a particle distribution is biased to the lower layer and the degree of dispersion is low. On the other hand, when the particle density of the lower layer and the particle density of the upper layer in the reaction vessel are equal to each other, it can be determined that the magnetic particles are uniformly dispersed in the entire reaction vessel. Therefore, it can be said that the lower the standard deviation of the particle density of each layer, the more uniform the particle density in the entire reaction vessel, and the higher the degree of dispersion.

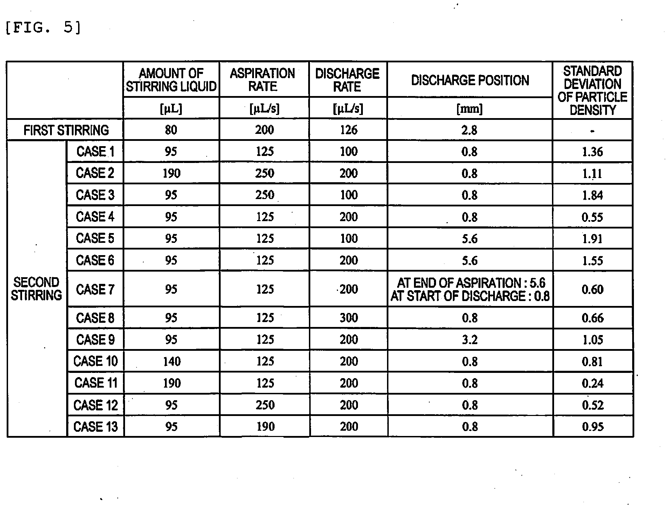

FIG. 5 a diagram illustrating parameter values and the degree of dispersion of the magnetic particles under each stirring condition. As illustrated in FIG. 5, the standard deviations of the particle densities in Cases 1 to 13 were 1.36, 1.11, 1.84, 0.55, 1.91, 1.55, 0.60, 0.66, 1.05, 0.81, 0.24, 0.52, and 0.95, respectively.

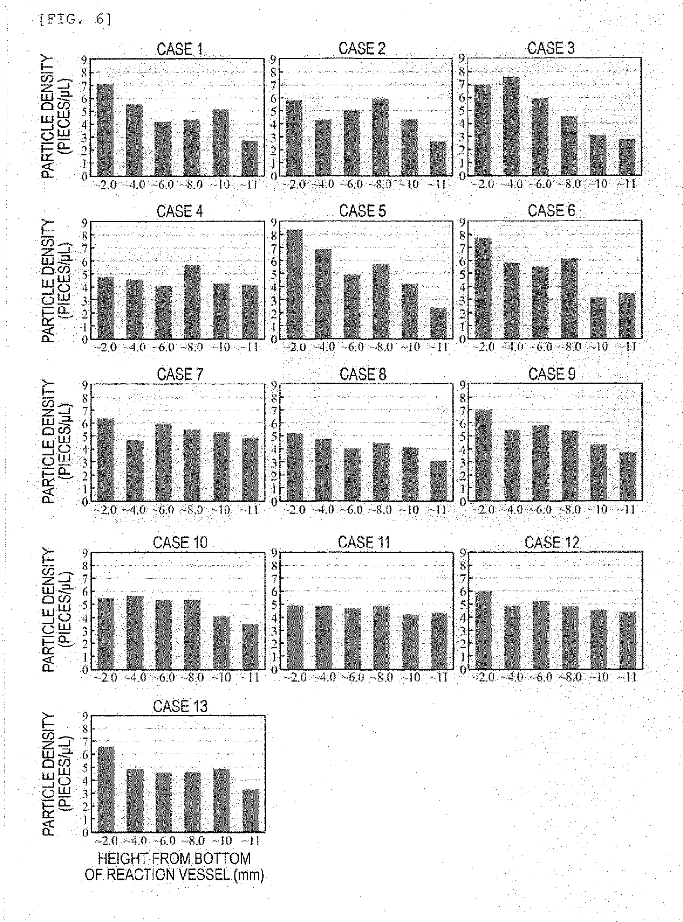

FIG. 6 is a graph illustrating the distributions of the particle densities in Cases 1 to 13. In each graph of FIG. 6, a horizontal axis represents a height (mm) from the bottom to each layer of the reaction vessel, and a vertical axis represents the particle density (particles/uL). The above-described standard deviation is calculated based on the particle density of each layer shown in FIG. 6.

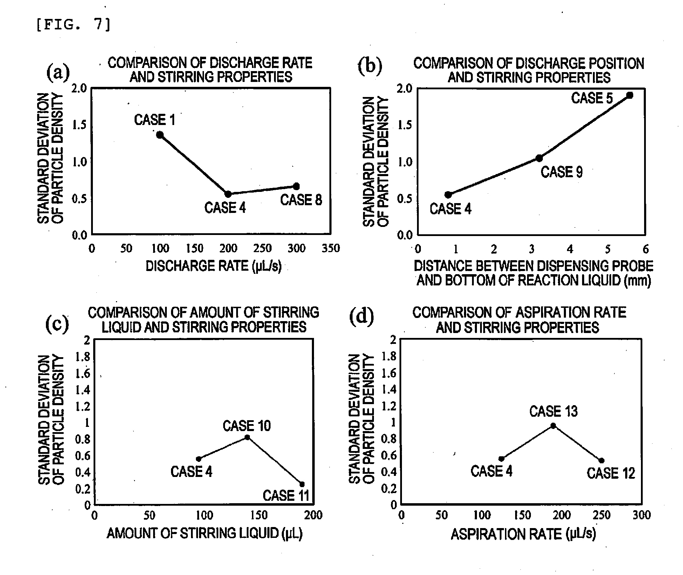

Next, based on the results of FIGS. 5 and 6, dependence of each parameter of the second stirring on the degree of dispersion (stirring property) was examined.
(a) to (d) of FIG. 7 are graphs each illustrating a relationship between each parameter of the second stirring and the degree of dispersion. In each graph of FIG. 7, a horizontal axis represents each parameter of the second stirring, and a vertical axis represents the standard deviation of the particle density.

First, a relationship between the discharge rate and the degree of dispersion was examined by comparing Cases 1, 4, and 8. (a) of FIG. 7 shows the relationship between the discharge rate and the degree of dispersion. As shown in (a) of FIG, 7, the standard deviation of the particle density in Case 1 (discharge rate: 100 µL/s) is 1.36, whereas the standard deviation of the particle density in Case 4 (discharge rate: 200 µL/s) is 0.55, and the standard deviation of the particle density in Case 8 (discharge rate: 300 µL/s) is 0.66. As described above, since the standard deviations of the particle densities in Case 4 and Case 8 are smaller than that in Case 1, it can be seen that dispersibility of the magnetic particles is improved when the discharge rate of the second stirring is faster than the discharge rate of the first stirring. The reasons are as follows. In the first stirring, the reagent in which the magnetic particles are dispersed is dispensed into the reaction vessel, and the reaction liquid is aspirated and discharged again immediately thereafter, and thus, the discharge rate at which the settled magnetic particles are wound up is not required. On the other hand, in the second stirring, since the magnetic particles settle on the bottom of the reaction vessel, the dispersibility can be improved by applying the aspirated reaction liquid with momentum to the settled magnetic particles. Therefore, by setting the discharge rate of the second stirring faster than the discharge rate of the first stirring, the dispersibility of the magnetic particles can be improved.

When the discharge rate is increased in the first stirring, the reaction liquid once aspirated into the dispensing tip is likely to remain in the dispensing tip as a liquid film. That is, the magnetic particles tend to remain together with the liquid film in the dispensing tip. As long as there is no purpose of dispersing the settled magnetic particles, the remaining of the magnetic particles can be prevented by slowing down the discharge rate in the first stirring. Therefore, with regard to the discharge rate, by setting the discharge rate of the second stirring to be faster than the discharge rate (126 µL/s) of the first stirring, for example, 200 µL/s to 300 µL/s, it is possible to more uniformly disperse the magnetic particles in the entire reaction liquid in the reaction vessel 34. It is also possible to set the discharge rate of the second stirring faster than 300 µL/s, but when the discharge rate is too fast, the magnetic particles may easily remain in the dispensing tip, and thus, the discharge rate is adjusted in accordance with the diameter of the dispensing tip, the amount of the reaction liquid, and the like. Of course, it is also possible to set the discharge rate of the second stirring slower than 200 µL/s under the condition that the discharge rate of the second stirring is faster than the discharge rate of the first stirring.

Next, a relationship between the discharge position and the degree of dispersion was examined by comparing Cases 4, 5, and 9. (b) of FIG. 7 shows the relationship between the discharge position and the degree of dispersion. As shown in (b) of FIG. 7, the standard deviation of the particle density in Case 4 (discharge position: 0.8 mm) is 0.55, the standard deviation of the particle density in Case 5 (discharge position: 5.6 mm) is 1.91, and the standard deviation of the particle density in Case 9 (discharge position: 3.2 mm) is 1.05. As described above, it can be seen that the standard deviation of the particle density becomes smaller and the dispersibility becomes better when the discharge position is closer to the bottom of the reaction vessel, that is, when the discharge position is lower. The reasons are as follows. In the first stirring, since the reaction liquid immediately after the magnetic particles are dispensed is aspirated, when the discharge position is set to a low position, an amount of the dispensing tip immersed in the reaction liquid increases, so that the reagent containing the magnetic particles adheres to a surface the dispensing tip. As a result, an amount of the magnetic particles taken out to the tip increases. Therefore, by raising the discharge position of the first stirring, it is possible to prevent the magnetic particles from adhering to the dispensing tip. On the other hand, in the second stirring, since the magnetic particles settle on the bottom of the reaction vessel, the tip end of the dispensing tip is brought close to a position closer to the bottom of the reaction vessel than that in the first stirring to discharge the reaction liquid, whereby kinetic energy of fluid can be given to the settled magnetic particles without being attenuated. As a result, the stirring efficiency can be improved.

Therefore, by setting the discharge position of the second stirring to a position lower than the discharge position of the first stirring, it is possible to uniformly disperse the magnetic particles in the entire reaction liquid in the reaction vessel. Specifically, when the dimensions of the dispensing tip or the magnetic particles described above are adopted, the distance between the tip end of the dispensing tip and the bottom of the reaction vessel can be set to less than 2.8 mm, and more specifically, can be set to 0.8 mm. Further, the magnetic particles can be dispersed more uniformly by lowering the discharge position as much as possible within a range in which the tip end of the dispensing tip does not come into contact with the settled magnetic particles in accordance with the amount of the magnetic particles.

Next, a relationship between the stirring liquid (aspiration liquid) and the degree of dispersion was examined by comparing Cases 4, 10, and 11. (c) of FIG. 7 shows the relationship between the stirring liquid and the degree of dispersion. As shown in (c) of FIG. 7, the standard deviation of the particle density in Case 4 (stirring liquid: 95 µL) is 0.55, the standard deviation of the particle density in Case 10 (stirring liquid: 140 µL) is 0.81, and the standard deviation of the particle density in Case 11 (stirring liquid: 190 µL) is 0.24.

As compared with Case 4, it can be seen that in Case 11 in which the aspiration liquid is more, the standard deviation of the particle density is smaller, and the dispersibility is better. However, in Case 11, since most of the reaction liquid is aspirated, the reagent containing a larger amount of magnetic particles is aspirated into the dispensing tip, and the amount of magnetic particles remaining in the dispensing tip may increase. Here, even when the aspiration amount of Case 4 is 95 µL which is close to 80 µL of the aspiration amount of the first stirring, since the magnetic particles are dispersed in the entire reaction vessel as illustrated in FIG. 6, it can be said that the stirring can be sufficiently performed even when the aspiration amount is small under the condition that the discharge rate is sufficiently fast. Therefore, when the discharge rate cannot be increased, the stirring efficiency of the second stirring can be improved by increasing the aspiration amount. In this simulation, the total amount of the reaction liquid was set to 200 µL, whereas a maximum amount of the aspiration liquid was set to 190 µL (Case 11). The reason for this is to prevent the aspiration of air bubbles as described above.

First, a relationship between the aspiration rate and the degree of dispersion was examined by comparing Cases 4, 12, and 13. (d) of FIG. 7 shows the relationship between the aspiration rate and the degree of dispersion. As shown in (d) of FIG. 7, the standard deviation of the particle density in Case 4 (aspiration rate: 125 µL/s) is 0.55, the standard deviation of the particle density in Case 12 (aspiration rate: 250 µL/s) is 0.52, and the standard deviation of the particle density in Case 13 (aspiration rate: 190 µL/s) is 0.95.

It can be seen that even when the aspiration rates in Cases 12 and 13 are made faster than the aspiration rate in Case 4, the dispersibility is not improved as compared with Case 4 in which the aspiration rate is low. In addition, when the aspiration rate is increased, the settled magnetic particles may be aspirated into the dispensing tip, and the amount of the magnetic particles remaining without being discharged from the dispensing tip may increase. Therefore, in order to avoid the aspiration of the magnetic particles, the aspiration rate of the second stirring can be made slower than the aspiration rate of the first stirring.

### <Summary>

As described above, the automatic analyzer 100 according to the first embodiment uses the dispensing probe that dispenses the specimen and the reagent to perform the first stirring immediately after mixing the magnetic particles (fine particles) and the second stirring after the magnetic particles precipitate after the predetermined period of time has elapsed from the first stirring. As described above, since the reaction liquid in which the magnetic particles are precipitated can be stirred without using a dedicated stirring mechanism, space saving and cost reduction of the device can be achieved. In addition, since the reaction of the magnetic particles, the specimen, and the reagent can be advanced by performing the second stirring, it is possible to reduce the variations in measurement result, and it is possible to improve the analysis accuracy of the specimen.

Further, by setting the conditions of the first stirring to be different from the conditions of the second stirring, the dispersibility of the magnetic particles can be improved, and thus the variations in measurement result can be further reduced.

### [Second Embodiment]

In the first embodiment, the method of stirring the reaction liquid using the dispensing mechanism including the dispensing probe and the dispensing tip has been described. On the other hand, in the second embodiment, a stirring method in a case of adopting a dispensing mechanism configured to directly aspirate a solution to a dispensing probe without using a dispensing tip is proposed.

### <Analysis Method>

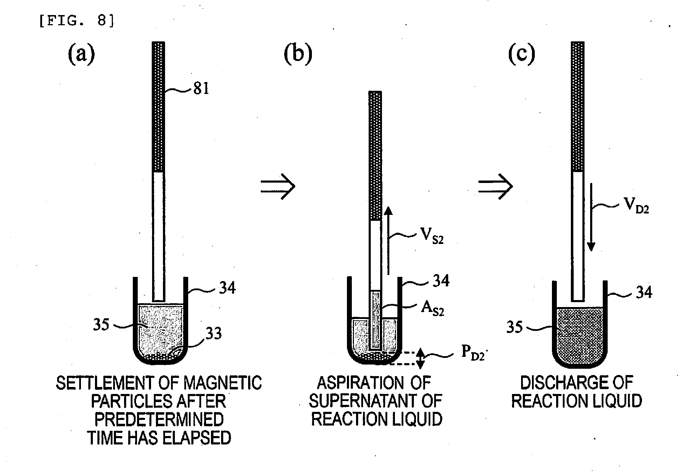

(a) to (c) of FIG. 8 are schematic views for illustrating a second stirring operation according to the second embodiment. As illustrated in (a) to (c) of FIG. 8, the present embodiment is different from the first embodiment in that a dispensing probe 81 that does not use a dispensing tip is used. In the configuration according to the present embodiment, the operation of discarding the dispensing tip and mounting a new dispensing tip after the first stirring is not performed, and instead, an operation of cleaning the dispensing probe 81 in a washing tank accommodating a washing liquid is performed. The dispensing probe 81 can be washed, for example, by aspirating and discharging the washing liquid in the washing tank.

The other operations are the same as those of the first embodiment, and thus the description thereof will be omitted. The conditions of the first stirring and the conditions of the second stirring in the present embodiment are also the same as those in the first embodiment.

### <Summary>

As described above, in the second embodiment, the reaction liquid 35 containing the magnetic particles 33 is stirred using the dispensing probe 81. As a result, a space for accommodating and discarding the dispensing tip is not required, and thus can further reduce a size of the device as compared with the first embodiment.

### [Third Embodiment]

In a third embodiment, an analysis method including B/F separation (a step of separating Bound specifically adsorbed to magnetic particles by an antigen-antibody reaction or the like and nonspecifically physically adsorbed Free) will be described.

### <Configuration Example of Automatic Analyzer>

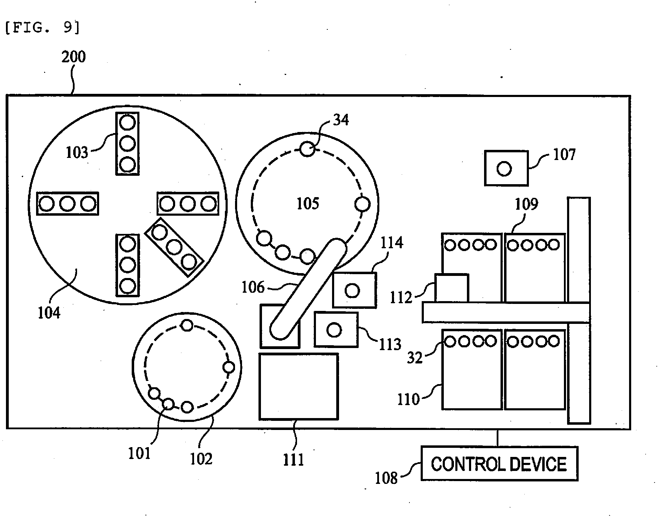

FIG. 9 is a schematic view illustrating an automatic analyzer 200 according to the third embodiment. As illustrated in FIG. 9, the automatic analyzer 200 is different from the automatic analyzer 100 (FIG. 1) according to the first embodiment in that the automatic analyzer 200 further includes a magnetic separation device 114 for the B/F separation. Other configurations are the same as those of the first embodiment. After the specimen, the reagent, and the magnetic particle solution are dispensed, the reaction vessel 34 is transported to the magnetic separation device 114 by the transport device 112.

### <Analysis Method>

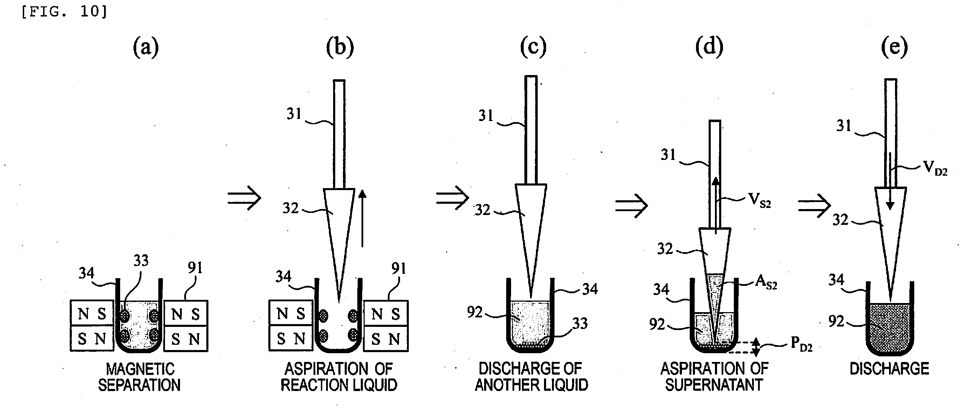

An analysis method according to the present embodiment is substantially the same as that of the first embodiment, but the operation after the first stirring is different in the following points.
(a) to (e) of FIG. 10 are schematic views for illustrating operations of the analysis method according to the third embodiment. (a) of FIG. 10 illustrates a state in which the reaction vessel 34 is transported to the magnetic separation device 114 by the transport device 112 after the first stirring. As illustrated in (a) of FIG. 10, in the magnetic separation device 114, magnets 91 are disposed around a concave portion where the reaction vessel 34 is stored, and the magnetic particles 33 are captured on an inner wall of the reaction vessel 34 by a magnetic field generated by the magnets 91.

Next, as illustrated in (b) of FIG. 10, the dispensing mechanism 106 aspirates and removes the solution not containing the magnetic particles 33 from the reaction vessel 34.

Next, as illustrated in (c) of FIG. 10, the transport device 112 transports the reaction vessel 34 from the magnetic separation device 114 to the incubator disk 105. Thereafter, the dispensing mechanism 106 dispenses the washing liquid 92 into the reaction vessel 34. At this time, since the magnetic particles 33 in the reaction vessel 34 are not affected by the magnetic field of the magnets 91, the magnetic particles 33 precipitate at the bottom of the reaction vessel 34 and can be stirred by the aspiration and discharge operations of the dispensing probe 31.

Next, as illustrated in (d) and (e) of FIG. 10, the dispensing mechanism 106 aspirates supernatant of the washing liquid 92 at the aspiration rate V_{S2} (µL/s), and then discharges the aspirated washing liquid 92 to the dispensing tip 32 at the discharge rate V_{D2} . The conditions of the aspiration rate V_{S2}, the aspiration amount A_{S2}, the discharge rate V_{D2}, and the discharge position P_{D2} are the same as the conditions of the second stirring described in the first embodiment.

### <Summary>

As described above, in the third embodiment, the magnetic particles 33 captured by the magnetic separation device 114 performing the B/F separation can be resuspended by the second stirring.

### [Modification]

The present disclosure is not limited to the above embodiments, and includes various modifications. For example, the above embodiments have been described in detail for easy understanding of the present disclosure, and are not necessarily limited to those including all the configurations described above. Further, a part of the configurations in one embodiment can be replaced with a configuration in another configuration. The configuration of another embodiment may be added to the configuration of one embodiment. Further, a part of the configuration of another embodiment may be added to, deleted from, or replaced with a part of the configuration of each embodiment.

### Reference Signs List

- 31, 81:: dispensing probe
- 32:: dispensing tip
- 33:: magnetic particle
- 34:: reaction vessel
- 35:: reaction liquid
- V_{S1}:: aspiration rate of first stirring
- A_{S1}:: aspiration amount of first stirring
- P_{D1}:: discharge position of first stirring
- V_{D1}:: discharge rate of first stirring
- V_{S2}:: aspiration rate of second stirring
- A_{S2}:: aspiration amount of second stirring
- P_{D2}:: discharge position of second stirring
- V_{D2}:: discharge rate of second stirring
- 91:: magnet
- 92:: washing liquid
- 100, 200:: automatic analyzer
- 101:: specimen vessel
- 102:: specimen vessel disk
- 103:: reagent vessel
- 104:: reagent vessel disk
- 105:: incubator disk
- 106:: dispensing mechanism
- 107:: detection unit
- 108:: control device
- 109:: reaction vessel storage unit
- 110:: dispensing tip storage unit
- 111:: disposal unit
- 112:: transport device
- 113:: dispensing tip mounting unit
- 114:: magnetic separation device

## Claims

1. An automatic analyzer comprising:
a probe configured to aspirate and discharge a specimen and a reagent; and
a control unit configured to control an operation of the probe,
wherein the control unit controls the probe so that
the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of aspirating, discharging, and stirring the liquid mixture in the vessel after the precipitation of the fine particles after the first stirring are performed.

2. The automatic analyzer according to claim 1, wherein
conditions of the first stirring are different from conditions of the second stirring.

3. The automatic analyzer according to claim 2, wherein
a discharge rate in the second stirring is faster than a discharge rate in the first stirring.

4. The automatic analyzer according to claim 2, wherein
a discharge position in the second stirring is closer to a bottom of the vessel than a discharge position in the first stirring.

5. The automatic analyzer according to claim 2, wherein
an aspiration rate in the second stirring is slower than an aspiration rate in the first stirring.

6. The automatic analyzer according to claim 2, wherein
an aspiration amount of the liquid mixture in the second stirring is smaller than a total amount of the liquid mixture.

7. The automatic analyzer according to claim 1, wherein
a tip is mounted on a tip end of the probe.

8. The automatic analyzer according to claim 7, wherein
the control unit controls the probe so that different tips are used in the first stirring and the second stirring.

9. The automatic analyzer according to claim 1, further comprising:
a transport device configured to transport the vessel; and
a magnet configured to apply a magnetic field to the vessel,
wherein the fine particles are magnetic particles, and
the control unit causes the transport device to transport the vessel to the magnetic field of the magnet after the first stirring,
causes the probe to aspirate and remove the liquid mixture other than the magnetic particles,
causes the probe to dispense the liquid to the vessel after removing the liquid mixture, and
causes the probe to perform the second stirring after dispensing the liquid.

10. An analysis method comprising:
dispensing a specimen, a reagent, and fine particles in an empty vessel by a probe to obtain a liquid mixture;
aspirating, discharging, and stirring the liquid mixture in the vessel by the probe before precipitation of the fine particles; and
aspirating, discharging, and stirring the liquid mixture in the vessel by the probe after the precipitation of the fine particles after the stirring.

11. The analysis method according to claim 10, wherein
stirring conditions are different between the stirring before the precipitation of the fine particles and the stirring after the precipitation of the fine particles.

## Amended claims

### Amended claims under Art. 19.1 PCT

**1.** (Amended) An automatic analyzer comprising:
a probe configured to aspirate and discharge a specimen and a reagent; and
a control unit configured to control an operation of the probe,
wherein the control unit controls the probe so that
the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of aspirating, discharging, and stirring the liquid mixture in the vessel after the precipitation of the fine particles after the first stirring are performed, and
a discharge rate in the second stirring is faster than a discharge rate in the first stirring.

**2.** Cancelled)

**3.** Cancelled)

**4.** (Amended) An automatic analyzer comprising:
a probe configured to aspirate and discharge a specimen and a reagent; and
a control unit configured to control an operation of the probe,
wherein the control unit controls the probe so that
the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of aspirating, discharging, and stirring the liquid mixture in the vessel after the precipitation of the fine particles after the first stirring are performed, and
a discharge position in the second stirring is closer to a bottom of the vessel than a discharge position in the first stirring.

**5.** (Amended) An automatic analyzer comprising:
a probe configured to aspirate and discharge a specimen and a reagent; and
a control unit configured to control an operation of the probe,
wherein the control unit controls the probe so that
the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of aspirating, discharging, and stirring the liquid mixture in the vessel after the precipitation of the fine particles after the first stirring are performed, and
an aspiration rate in the second stirring is slower than an aspiration rate in the first stirring.

**6.** Cancelled)

**7.** Cancelled)

**8.** (Amended) An automatic analyzer comprising:
a probe configured to aspirate and discharge a specimen and a reagent; and
a control unit configured to control an operation of the probe,
wherein the control unit controls the probe so that a first tip is mounted on a tip end of the probe, the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of mounting a second tip different, from the first tip on the tip end of the probe, and aspirating, discharging, and stirring the liquid mixture in the vessel after the precipitation of the fine particles after the first stirring are performed.

**9.** (Amended) An automatic analyzer comprising:
a probe configured to aspirate and discharge a specimen and a reagent; and
a control unit configured to control an operation of the probe,
wherein the control unit controls the probe so that
the specimen, the reagent, and fine particles are dispensed to an empty vessel to obtain a liquid mixture, and
a first stirring of aspirating, discharging, and stirring the liquid mixture in the vessel before precipitation of the fine particles after the dispensing, and
a second stirring of aspirating, discharging, and stirring the liquid mixture in the vessel after the precipitation of the fine particles after the first stirring are performed, and
the fine particles are magnetic particles,
the automatic analyzer further comprising:
a transport device configured to transport the vessel; and
a magnet configured to apply a magnetic field to the vessel, wherein
the control unit
causes the transport device to transport the vessel to the magnetic field of the magnet after the first stirring,
causes the probe to aspirate and remove the liquid mixture other than the magnetic particles,
causes the probe to dispense the liquid to the vessel after removing the liquid mixture, and
causes the probe to perform the second stirring after dispensing the liquid.

**10.** (Amended) An analysis method comprising:
dispensing a specimen, a reagent, and fine particles in an empty vessel by a probe to obtain a liquid mixture;
aspirating, discharging, and stirring the liquid mixture in the vessel by the probe before precipitation of the fine particles; and
aspirating, discharging, and stirring the liquid mixture in the vessel by the probe after the precipitation of the fine particles after the stirring, wherein
a discharge rate in the stirring after the precipitation of the fine particles is faster than a discharge speed in the stirring before the precipitation of the fine particles.

**11.** Cancelled)

**12.** Added) An analysis method comprising:
dispensing a specimen, a reagent, and fine particles in an empty vessel by a probe to obtain a liquid mixture;
aspirating, discharging, and stirring the liquid mixture in the vessel by the probe before precipitation of the fine particles; and
aspirating, discharging, and stirring the liquid mixture in the vessel by the probe after the precipitation of the fine particles after the stirring, wherein
a discharge position in the stirring after the precipitation of the fine particles is closer to a bottom of the vessel than the discharge position in the stirring before the precipitation of the fine particles.

**13.** Added) An analysis method comprising:
dispensing a specimen, a reagent, and fine particles in an empty vessel by a probe to obtain a liquid mixture;
aspirating, discharging, and stirring the liquid mixture in the vessel by the probe before precipitation of the fine particles; and
aspirating, discharging, and stirring the liquid mixture in the vessel by the probe after the precipitation of the fine particles after the stirring, wherein
an aspiration rate in the stirring after the precipitation of the fine particles is slower than an aspiration speed in the stirring before the precipitation of the fine particles.

**14.** Added) An analysis method comprising:
dispensing a specimen, a reagent, and fine particles in an empty vessel by a probe having a tip end on which a first tip is mounted to obtain a liquid mixture;
aspirating, discharging, and stirring the liquid mixture in the vessel by the probe before precipitation of the fine particles; and
aspirating, discharging, and stirring the liquid mixture in the vessel by the probe having the tip end on which a second tip different from the first tip is mounted after the precipitation of the fine particles after the stirring.

**15.** Added) An analysis method comprising:
dispensing a specimen, a reagent, and magnetic particles in an empty vessel by a probe to obtain a liquid mixture;
aspirating, discharging, and stirring the liquid mixture in the vessel by the probe before precipitation of the magnetic particles;
transporting the vessel to a magnetic field of a magnet by a transport device that transports the container after the stirring before the precipitation of the magnetic particles;
aspirating and removing the liquid mixture other than the magnetic particles by the probe;
transporting the vessel to the outside of the magnetic field by the transport device after the removal of the liquid mixture;
dispensing the liquid to the vessel by the probe after the transport to the outside of the magnetic field; and
aspirating, discharging, and stirring the liquid in the vessel by the probe after the dispensing of the liquid after the precipitation of the magnetic particles.
